# FASCICULE DE BREVET EUROPEEN

(11) **EP 1 713 560 B1**
(45) Date de publication et mention de la délivrance du brevet: **03.09.2008**
(21) Numéro de dépôt: 05717537.4
(22) Date de dépôt: 02.02.2005
(51) Int. Cl.: B01D 46/12

(54) **STRUCTURE DE FILTRATION, NOTAMMENT FILTRE A PARTICULES POUR LES GAZ D ECHAPPEMENT D UN MOTEUR A COMBUSTION INTERNE ET LIGNE D ECHAPPEMENT ASSOCIEE**
FILTERSTRUKTUR, INSBESONDERE TEILCHENFILTER, FÜR ABGASE EINES VERBRENNUNGSMOTORS UND ZUGEHÖRIGE ABGASLEITUNG
FILTERING STRUCTURE, ESPECIALLY PARTICLE FILTER FOR EXHAUST GASES OF AN INTERNAL COMBUSTION ENGINE, AND ASSOCIATED EXHAUST LINE

(30) Priorité: 04.02.2004 FR 0401077
(43) Date de publication de la demande: 25.10.2006
(73) Titulaire: Saint-Gobain Centre de Recherches et d'Etudes Européen, 92400 Courbevoie (FR)
(72) Inventeur: BARDON, Sébastien, Jauffret BP224 84306 Cavaillon (FR); BONNAIL, Nicolas, F-84000 Avignon (FR); BRIOT, Anthony, F-84000 Avignon (FR); GLEIZE, Vincent, F-84000 Avignon (FR); SCALABRINO, Matteo, Via Sempione, 230-20016 PERO (MI) (IT)
(74) Mandataire: Domenego, Bertrand
(86) Numéro de dépôt international: PCT/FR2005/000225
(87) Numéro de publication internationale: WO 2005/084782

(56) Documents cités:
- FR-A- 2 833 857
- US-A1- 2003 138 596

## Description

La présente invention concerne une structure de filtration, notamment un filtre à particules pour les gaz d'échappement d'un moteur à combustion interne, du type comprenant :
- au moins des premier et deuxième organes de filtration, chaque organe de filtration présentant une face d'admission et une face d'évacuation, reliées entre elles par au moins trois faces latérales, lesdits premier et deuxième organes de filtration présentant respectivement une première et une deuxième faces latérales disposées en regard l'une de l'autre ; et
- un joint de liaison desdites faces, s'étendant entre lesdites faces ; la première face latérale comprenant au moins une première région d'adhérence faible ou nulle avec ledit joint, qui s'étend en regard d'une première région d'adhérence forte avec ledit joint de la deuxième face latérale, ladite première région d'adhérence faible ou nulle étant délimitée, par au moins une partie de l'arête commune à la première face et à la face d'évacuation.

De telles structures sont utilisées notamment dans les dispositifs de dépollution des gaz d'échappement de moteurs à combustion interne. Ces dispositifs comportent un pot d'échappement comprenant en série un organe de purification catalytique et un filtre à particules. L'organe de purification catalytique est adapté pour le traitement des émissions polluantes en phase gazeuse, alors que le filtre à particules est adapté pour retenir les particules de suie émises par le moteur.

Dans une structure connue du type précité (FR -A- 2 833 857), les organes de filtration comprennent un ensemble de conduits adjacents d'axes parallèles, séparés par des parois poreuses de filtration. Ces conduits s'étendent entre la face d'admission des gaz d'échappement à filtrer et la face d'évacuation des gaz d'échappement filtrés. Ces conduits sont par ailleurs obturés à l'une ou l'autre de leurs extrémités pour délimiter des chambres d'entrée s'ouvrant sur la face d'admission et des chambres de sortie s'ouvrant sur la face d'évacuation.

Ces structures fonctionnent suivant une succession de phases de filtration et de régénération. Lors des phases de filtration, les particules de suie émises par le moteur se déposent sur les parois des chambres d'entrée. La perte de charge à travers le filtre augmente progressivement. Au-delà d'une valeur prédéterminée de cette perte de charge, une phase de régénération est effectuée.

Lors de la phase de régénération, les particules de suie, composées essentiellement de carbone, sont brûlées sur les parois des chambres d'entrée, grâce à des moyens de chauffage auxiliaires, afin de restituer à la structure ses propriétés originelles.

Cependant, la combustion des suies dans le filtre ne se fait pas de manière homogène. La combustion démarre à l'avant et au milieu du filtre puis se propage. Des gradients de température apparaissent dans le filtre lors des phases de régénération.

Les gradients de température au sein de la structure de filtration génèrent des dilatations locales d'amplitudes différentes, et par suite, des contraintes longitudinales et transversales dans et/ou entre les différents organes de filtration.

Ces fortes contraintes thermomécaniques sont à l'origine de fissures dans les organes de filtration et/ou dans les joints de liaison entre ces organes de filtration.

Pour limiter le risque d'apparition de ces fissures, la demande FR -A- 2 833 857 précitée propose de créer sur ladite première face, au voisinage de ladite arête commune, une région d'adhérence faible ou nulle avec le joint, notamment par dépôt dans cette région d'un revêtement antiadhésif. La présence de cette région permet de relâcher les contraintes thermomécaniques dans le joint, et si ces contraintes sont trop fortes, de guider la propagation d'éventuelles fissures dans le joint le long de cette région.

Une telle structure ne donne pas entière satisfaction. En effet, au-delà d'un certain nombre de phases de régénération, des fissures peuvent apparaître également au sein d'un organe de filtration. Ces fissures se propagent sensiblement dans un plan de fissuration transversal par rapport à la direc-tion longitudinale de cet organe. Si les faces latérales de l'organe de filtration comprennent en outre des régions d'adhérence faible ou nulle avec le joint au voisinage de la face d'évacuation, les fissures se propagent également dans ces régions.

De ce fait, la partie aval de l'organe de filtration ainsi délimitée entre le plan de fissuration et la face de sortie n'est plus retenue par le joint. Cette partie aval est alors susceptible de se détacher de la structure de filtration et d'être évacuée vers l'aval dans la ligne d'échappement.

L'invention a pour but principal de remédier à cet inconvénient, c'est-à-dire de fournir une structure de filtration poreuse pour filtre à particules, qui maintient la cohésion mécanique au sein des organes de filtration.

A cet effet, l'invention a pour objet une structure de filtration du type précité, caractérisée en ce que, dans une zone adjacente à ladite arête commune, ladite première région d'adhérence faible ou nulle avec ledit joint comporte au moins un bord latéral de forme divergente vers la face d'évacuation, ledit bord latéral s'étendant jusqu'à ladite arête commune.

La structure de filtration selon l'invention peut comporter une ou plusieurs des caractéristiques suivantes, prises isolément ou suivant toutes combinaisons techniquement possibles :
- le reste de ladite zone présente, sur ladite première face, une deuxième région d'adhérence forte avec ledit joint, laquelle s'étend jusqu'à ladite arête commune, et sur ladite deuxième face, une deuxième région d'adhérence faible ou nulle avec ledit joint, en regard de ladite deuxième région d'adhérence forte avec ledit joint ;
- l'angle formé par ledit bord latéral et ladite arête commune, est inférieur ou égal à 50° environ ;
- ladite première région d'adhérence faible ou nulle avec ledit joint s'étend sensiblement suivant toute la longueur de ladite arête commune ;
- ladite première région d'adhérence faible ou nulle avec ledit joint est délimitée par un triangle ;
- la première face latérale comporte une troisième région d'adhérence faible ou nulle avec ledit joint, distincte de la première région d'adhérence faible ou nulle avec ledit joint, délimitée au moins partiellement par ladite arête commune et comprenant au moins un bord latéral de forme divergente vers la face d'évacuation, ce bord latéral s'étendant jusqu'à ladite arête commune;
- la première face comporte au moins une quatrième région d'adhérence faible ou nulle avec ledit joint, qui comporte au moins un bord latéral convergent, de forme convergente vers la face d'évacuation, le bord latéral convergent s'étendant jusqu'à ladite première région d'adhérence faible ou nulle avec ledit joint, ladite quatrième région d'adhérence faible ou nulle avec ledit joint étant disposée en regard d'une quatrième région d'adhérence forte avec ledit joint de la deuxième face ; et
- le premier organe de filtration présente une troisième face latérale, disposée en regard d'une quatrième face latérale d'un troisième organe de filtration, la troisième face latérale comprenant au moins une cinquième région d'adhérence forte avec ledit joint, délimitée au moins partiellement par l'arête de sortie commune à la troisième face et à la face de sortie,
et dans une zone adjacente à ladite arête de sortie, la cinquième région d'adhérence forte avec ledit joint comporte au moins un bord latéral de forme divergente vers la face d'évacuation, ce bord latéral s'étendant jusqu'à ladite arête de sortie, la cinquième région d'adhérence forte avec ledit joint étant disposée en regard d'une cinquième région d'adhérence faible ou nulle avec ledit joint sur ladite quatrième face.

L'invention a également pour objet une ligne d'échappement caractérisée en ce qu'elle comprend une structure telle que définie ci-dessus.

Des exemples de mise en oeuvre de l'invention vont maintenant être décrits en regard des dessins annexés, sur lesquels :
- la Figure 1 est une vue en perspective d'une première structure de filtration selon l'invention ;
- la Figure 2 est une vue partielle en perspective éclatée de la structure de filtration de la Figure 1 ;
- la Figure 3 est une vue en plan de deux faces en regard des organes de filtration de la Figure 2 ;
- la Figure 4 est une vue analogue à la Figure 2, après plusieurs cycles de régénération de la structure de filtration ;
- la Figure 4A est une vue partielle, prise en coupe suivant le plan IV-IV de la Figure 4, qui est un plan longitudinal décalé par rapport à l'axe central d'un organe de filtration ;
- la Figure 5 est une vue analogue à la Figure 3, d'une deuxième structure de filtration selon l'invention ;
- la Figure 6 est une vue analogue à la Figure 3 d'une troisième structure de filtration selon l'invention ;
- la Figure 7 est une vue analogue à la Figure 4 de la troisième structure de filtration selon l'invention ; et
- la Figure 8 est une vue analogue à la Figure 4 d'une quatrième structure de filtration selon l'invention.
- la Figure 9 est une vue analogue à la Figure 3 d'une cinquième structure de filtration selon l'invention ; et
- la Figure 10 est une vue analogue à la Figure 3 d'une sixième structure selon l'invention.

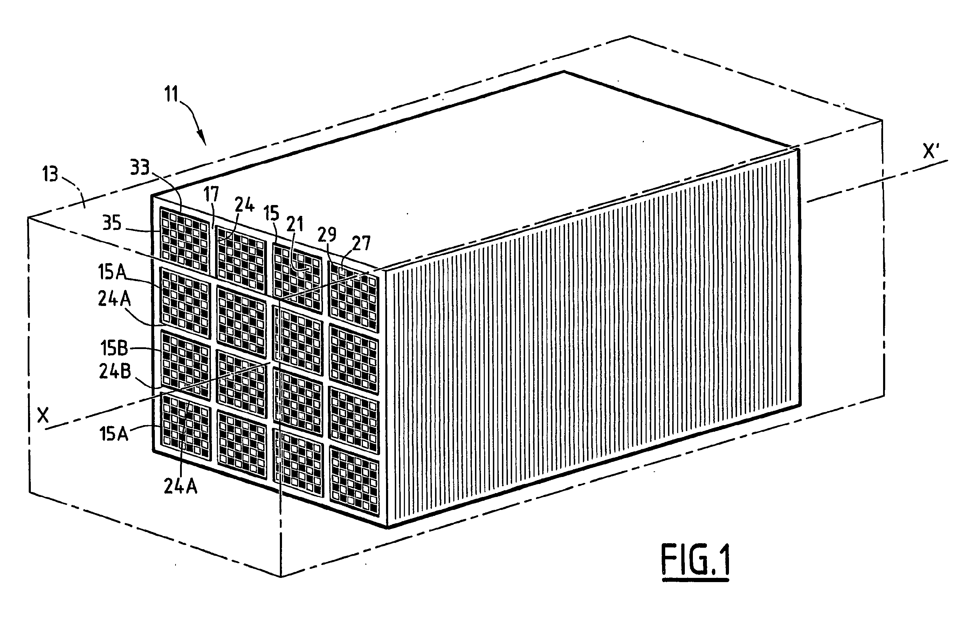

Le filtre à particules 11 représenté sur la Figure 1 est disposé dans une ligne 13 d'échappement des gaz d'un moteur diesel de véhicule automobile, représentée partiellement.

Cette ligne d'échappement 13 se prolonge au-delà des extrémités du filtre à particules 11 et délimite un passage de circulation des gaz d'échappement.

Le filtre à particules 11 s'étend suivant une direction X-X' longitudinale de circulation des gaz d'échappement. Il comprend une pluralité de blocs 15 de filtration reliés entre eux par des joints de liaison 17.

Chaque bloc de filtration 15 est de forme sensiblement parallélépipédique rectangle allongé suivant la direction longitudinale X-X'.

Le terme « bloc de filtration » désigne plus largement un ensemble comportant une face d'admission, une face d'évacuation et au moins trois faces latérales (quatre faces latérales dans l'exemple représenté) qui relient la face d'admission à la face d'évacuation.

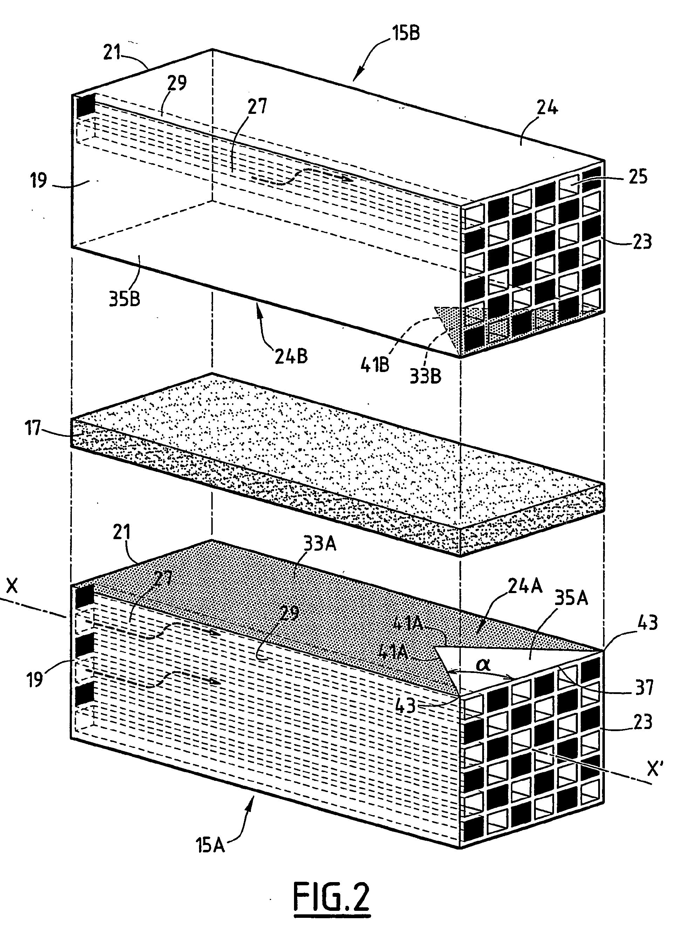

Comme illustré sur la Figure 2, chaque bloc de filtration 15A, 15B comporte une structure de filtration 19 poreuse, une face 21 d'admission des gaz d'échappement à filtrer, une face 23 d'évacuation des gaz d'échappement filtrés, et quatre faces latérales 24.

La structure de filtration poreuse 19 est réalisée en un matériau de filtration constitué d'une structure monolithique, notamment en céramique (cordiérite ou carbure de silicium).

Cette structure 19 possède une porosité suffisante pour permettre le passage des gaz d'échappement. Cependant, comme connu en soi, le diamètre des pores est choisi suffisamment petit pour assurer une retenue des particules de suie.

La structure poreuse 19 comporte un ensemble de conduits adjacents d'axes parallèles à la direction longitudinale X-X'. Ces conduits sont séparés par des parois 25 poreuses de filtration. Dans l'exemple illustré sur la Figure 2, ces parois 25 sont d'épaisseur constante et s'étendent longitudinalement dans la structure de filtration 19, de la face d'admission 21 à la face d'évacuation 23.

Les conduits sont répartis en un premier groupe de conduits d'entrée 27 et un second groupe de conduits de sortie 29. Les conduits d'entrée 27 et les conduits de sortie 29 sont disposés tête-bêche.

Les conduits d'entrée 27 sont obturés au niveau de la face d'évacuation 23 du bloc de filtration 15A, 15B et sont ouverts à leur autre extrémité.

Au contraire, les conduits de sortie 29 sont obturés au niveau de la face d'admission 21 du bloc de filtration 15A, 15B et débouchent suivant sa face d'évacuation 23.

Dans l'exemple illustré Figure 1, les conduits d'entrée 27 et de sortie 29 ont des sections constantes suivant toute leur longueur.

Comme représenté sur la Figure 2, les faces latérales 24A et 24B des blocs 15A et 15B en regard sont planes.

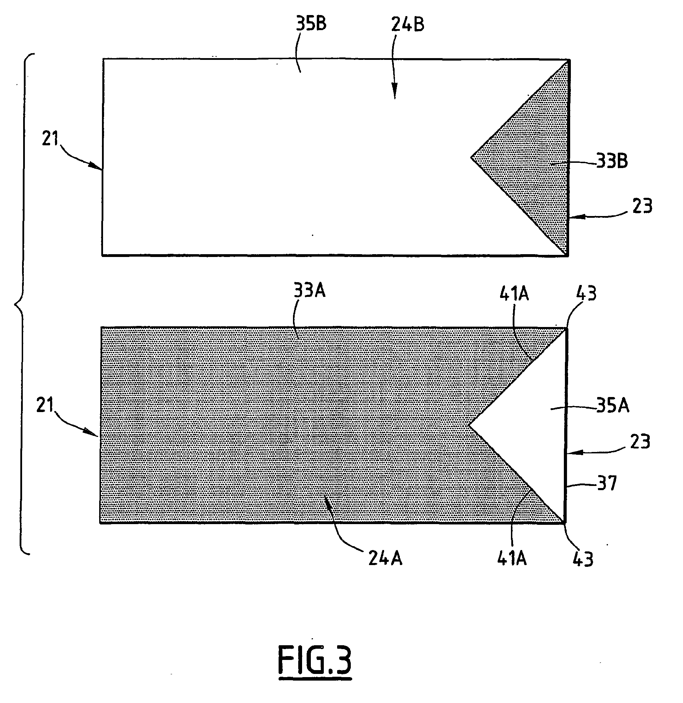

Comme illustré sur les Figures 2 et 3, chaque face plane 24A et 24B située en regard d'un autre bloc de filtration comprend au moins une région 33a, 33b fermement solidaire du joint 17, et au moins une région 35a, 35b qui, lors de la fabrication de la structure 19, est couverte d'un revêtement antiadhésif. Ce revêtement est par exemple à base de papier, de polytétrafluoroéthylène, ou de nitrure de bore.

L'adhérence entre le joint de liaison 17 et les faces planes 24 des blocs de filtration 15 dans les régions 33 d'adhérence forte avec le joint est au moins 10 fois supérieure à celle des régions 35 d'adhérence faible ou nulle avec le joint 17. L'adhérence des régions 35 d'adhérence faible ou nulle avec le joint 17 est comprise entre 0 et 50 MPa.

Dans tout ce qui suit, on désignera par « région d'adhérence forte », une région 33 d'adhérence forte avec le joint 17 et par « région d'adhérence faible », une région 35 d'adhérence faible ou nulle avec le joint 17.

La disposition des régions 33 et des régions 35 sur les faces planes 24 des blocs de filtration 15 est illustrée sur les Figures 2 et 3.

La première face plane 24A du premier bloc de filtration 15A comprend une première région triangulaire 35A d'adhérence faible délimitée par l'arête 37 commune à la face d'évacuation 23 et à la première face 24A. Cette région 35A est également délimitée par deux bords latéraux 41A de forme divergente vers la face d'évacuation 23, qui s'étendent jusqu'à l'arête commune 37. Comme illustré sur la Figure 3, la première région d'adhérence faible 35A est ainsi délimitée par un triangle isocèle, la base de ce triangle isocèle étant formée par l'arête commune 37.

L'angle α formé par chacun des bords latéraux 41A et l'arête commune 37 est de préférence inférieur ou égal à 50°. Dans l'exemple représenté, cet angle est égal à 45°.

Comme illustré sur les Figures 2 et 3, la première région d'adhérence faible 35A s'étend en regard d'une première région 33B d'adhérence forte de la deuxième face plane 24B. Les première région d'adhérence faible 35A et première région d'adhérence forte 33B sont de formes sensiblement identiques.

La première face plane 24A du premier bloc de filtration 15A comprend en outre une deuxième région 33A d'adhérence forte.

Cette deuxième région 33A d'adhérence forte s'étend au moins jusqu'à un point 43 de l'arête commune 37. De préférence, cette région 33A d'adhérence forte s'étend jusqu'à au moins deux points 43 de l'arête commune 37. Dans l'exemple illustré sur la Figure 3, ces deux points 43 sont situés aux extrémités latérales de l'arête 37.

Ainsi, les première région 35A d'adhérence faible et deuxième région d'adhérence forte 33A de la première face 24A sont de formes complémentaires.

Par ailleurs, la deuxième région d'adhérence forte 33A s'étend en regard d'une deuxième région d'adhérence faible 35B sur la deuxième face 24B.

La deuxième région d'adhérence forte 33A sur la première face 24A et la deuxième région d'adhérence faible 35B sur la deuxième face 24B sont également de formes sensiblement identiques.

Le joint de liaison 17 est disposé entre les faces planes 24 des blocs de filtration 15. Ce joint de liaison 17 est réalisé à base de ciment céramique, comprenant généralement de la silice et/ou du carbure de silicium et/ou du nitrure d'aluminium. Après frittage, ce ciment a un module d'élasticité de 500 à environ 5000 MPa. Ce ciment solidarise les blocs de filtration 15 entre eux.

Le fonctionnement de la première structure de filtration selon l'invention va maintenant être décrit.

Lors d'une phase de filtration (Figure 1), les gaz d'échappement chargés de particules sont guidés jusqu'aux faces d'entrée 21 des blocs de filtration 15 par la ligne d'échappement 13. Comme indiqué par des flèches sur la Figure 2, ils pénètrent ensuite dans les conduits d'entrée 27, et passent à travers les parois 25 de la structure poreuse 19. Lors de ce passage, les suies se déposent sur les parois 25 des conduits d'entrée 27. Ces suies se déposent préférentiellement dans la région de l'axe central du filtre à particules 11 et vers la face d'évacuation 23 des blocs de filtration 15 (à droite sur le dessin).

Les gaz d'échappement filtrés s'échappent par les conduits d'évacuation 29 et sont guidés vers la sortie du pot d'échappement.

Lorsque le véhicule a parcouru 500 km environ, la perte de charge à travers le filtre 11 augmente de manière significative. Une phase de régénération est alors effectuée.

Dans cette phase, les suies sont oxydées par élévation de la température du filtre 11. Cette oxydation est exothermique et démarre au milieu et en avant du filtre. Cela entraîne donc un gradient de température entre les zones avant et arrière ainsi qu'entre la périphérie et le centre du filtre.

Par ailleurs, les blocs de filtration 15 et les joints 17 se dilatent sous l'effet de la température. L'amplitude locale de cette dilatation dépend de la température.

Ces variations d'amplitude de dilatation, sous l'effet des gradients de température, génèrent de fortes contraintes thermomécaniques. La présence de régions 35 d'adhérence faible, permet de relâcher les contraintes et d'éviter la création de fissures dans les blocs de filtration 15 ou dans les joints de liaison 17.

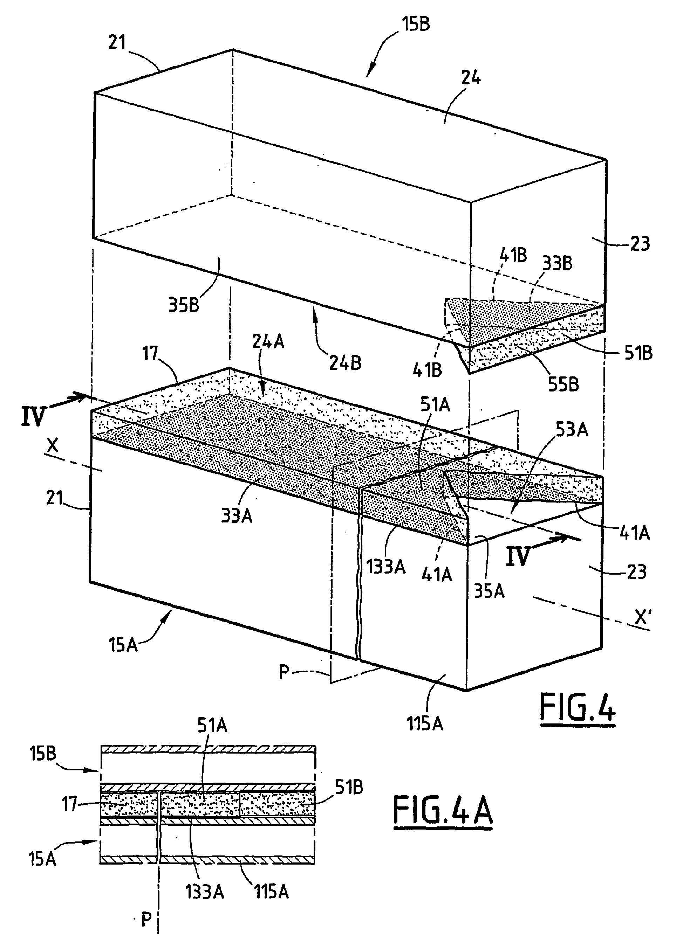

Par ailleurs, comme illustré sur la Figure 4, si les contraintes thermomécaniques sont trop fortes pour la structure, l'un des blocs, par exemple le premier bloc 15A, peut se fissurer le long d'un plan P de fissuration transversal, perpendiculaire à l'axe X-X'. Les fissures se propagent jusqu'au joint 17 et au sein de ce joint 17. Toutefois, les régions 35 d'adhérence faible et les régions 33 d'adhérence forte sont agencées de telle sorte que la fissuration se fait dans des zones privilégiées.

Ainsi, comme illustré sur la Figure 4, la propagation des fissures dans les joints 17 est guidée le long des régions 35 d'adhérence faible sur les faces planes 24 des blocs de filtration 15.

Par suite, et comme illustré sur les Figures 4 et 4A, même si le bloc 15A et le joint 17 sont totalement fissurés dans le plan P, détachant une partie aval 115A du bloc 15A, une première partie 51A du joint 17 reste solidaire de la partie aval 115A en regard de la partie correspondante 133A de la deuxième zone d'adhérence forte 33A. Cette première partie 51A de joint 17 délimite vers l'aval un évidement triangulaire 53A ménagé en regard de la première région 35A d'adhérence faible et limité par les bords obliques 41A.

Par ailleurs, la deuxième partie 51B de joint 17 située en regard de la première région 33B d'adhérence forte de la deuxième face 24B reste solidaire du deuxième bloc de filtration 15B et forme une butée triangulaire 55B de retenue, en saillie par rapport à ce bloc de filtration 15B.

Ainsi, si une partie aval 115A du premier bloc de filtration 15A, délimitée par le plan P de fissuration et la face d'évacuation 23, se détache de ce bloc 15A sous l'effet des fissures transversales au sein du bloc 15A et des fissures dans le joint 17, cette partie 115A est retenue par coopération entre les parois de l'évidement 53A, solidaires de la partie 115A, et la butée 55B solidaire du deuxième bloc de filtration 15B.

Le déplacement de la partie 115A vers l'aval du filtre 11 est donc empêché, grâce à la forme divergente de la butée 55B, quelle que soit la position longitudinale du plan P de fissuration entre la face d'admission 21 et la face d'évacuation 23. La forme de la butée 55B résulte directement de l'angle formé par les bords latéraux 41A et l'arête commune 37.

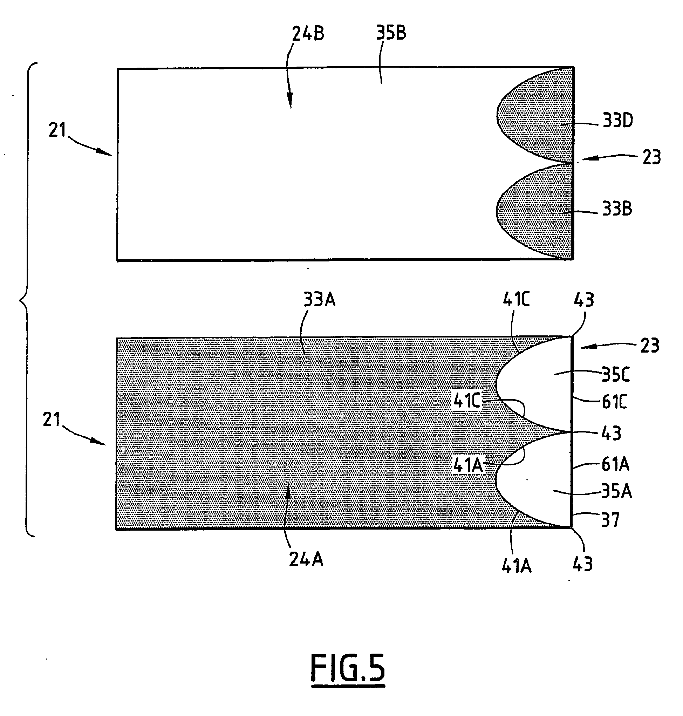

Dans la deuxième structure de filtration illustrée sur la Figure 5, la première face 24A présente des première et troisième régions 35A et 35C d'adhérence faible, délimitées respectivement par des segments 61A et 61C complémentaires de l'arête commune 27. Chaque région d'adhérence faible 35A, 35C comprend deux paires de bords latéraux 41A, 41C de forme divergente vers la face d'évacuation 23. Comme illustré sur la Figure 5, ces paires de bords 41A et 41C sont courbes et convexes, et les deux bords de chaque paire se raccordent tangentiellement l'un à l'autre.

Par ailleurs, la première région 33A d'adhérence forte de la première face 24A comporte trois points de contact 43 avec l'arête commune 27, situés aux extrémités des segments 61A et 61C.

Comme illustré sur la Figure 5, chaque région 35A, 35C d'adhérence faible de la première face 24A est en regard d'une région 33B, 33D d'adhérence forte de la deuxième face 24B, de forme sensiblement identique.

Le fonctionnement de cette deuxième structure selon l'invention est analogue au fonctionnement de la première structure. Toutefois, cette structure est susceptible de retenir plus efficacement d'éventuelles parties aval détachées du premier bloc de filtration 15A en cas de fissuration.

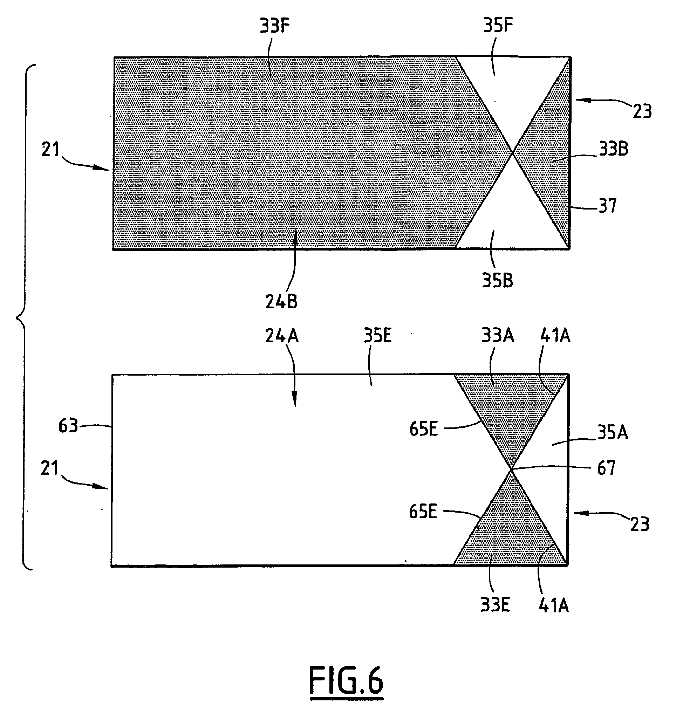

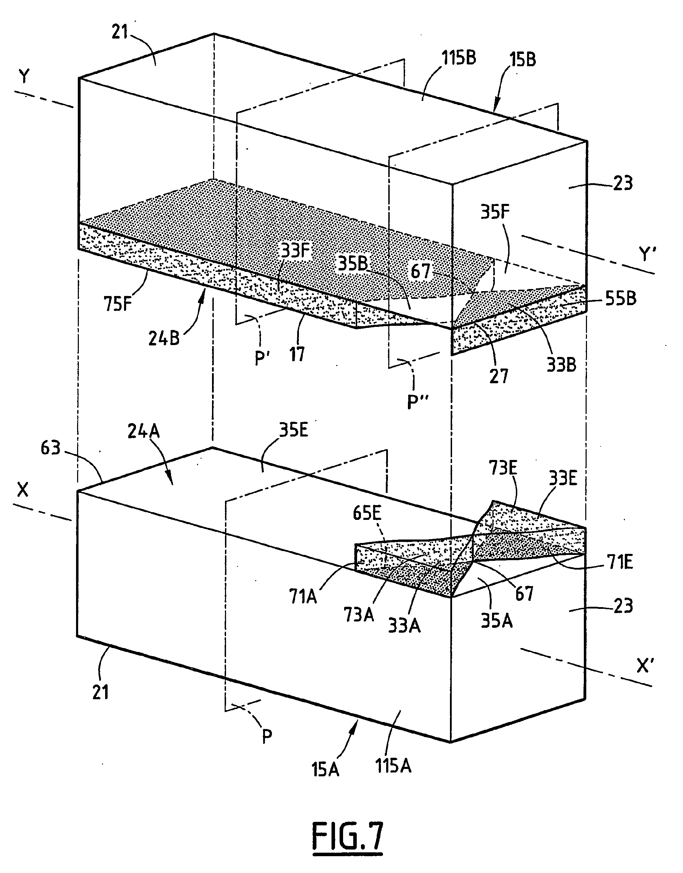

Une troisième structure de filtration selon l'invention est illustrée sur les Figures 6 et 7.

A la différence de la première structure, la première face 24A comprend une quatrième région 35E d'adhérence faible sur la première face 24A, qui s'étend entre l'arête d'entrée 63, commune à la face d'admission 21 et à la première face 24A, et au moins deux lignes 65E, de forme convergente vers la face de sortie 23.

Les première et quatrième régions 35A, 35E d'adhérence faible possèdent un point de contact 67, à l'intersection des deux lignes 65E convergentes de la quatrième région d'adhérence faible 35E et des deux bords latéraux 41A de la première région 35A d'adhérence faible ou nulle.

Comme illustré sur la Figure 6, le reste de la première face 24A forme deux zones 33A et 33E d'adhérence forte qui sont adjacentes au niveau du point de contact 67.

Comme dans la première structure, chaque région 35A, 35E d'adhérence faible de la première face 24A est disposée en regard d'une région 33B, 33F d'adhérence forte sur la deuxième face 24B, de forme sensiblement identique.

Le fonctionnement de cette structure est analogue au fonctionnement de la première structure pour le premier bloc de filtration. Toutefois, en cas de fissuration, les parties de joint 71A et 71 E en regard des régions d'adhérence forte 33A et 33E de la première face 24A forment des butées 73A et 73E de retenue de la partie de joint 75F en regard de la quatrième région 33F d'adhérence forte de la deuxième face 24B.

Ainsi, comme dans la première structure, le deuxième bloc de filtration 15B retient, par la butée 55B, toute partie aval 115A du premier bloc de filtration 15A, délimitée par un plan de fissuration P et la face d'évacuation 23, en cas de fissuration au sein de ce bloc 15A.

En outre, le premier bloc de filtration 15A retient, par les butées 73A et 73E, toute partie aval 115B du deuxième bloc de filtration 15B, délimitée, d'une part, par tout plan transversal de fissuration P' situé entre la face d'entrée 21 et le plan P" perpendiculaire à l'axe longitudinal Y-Y' passant par le point de contact 67, et d'autre part, par la face de sortie 23.

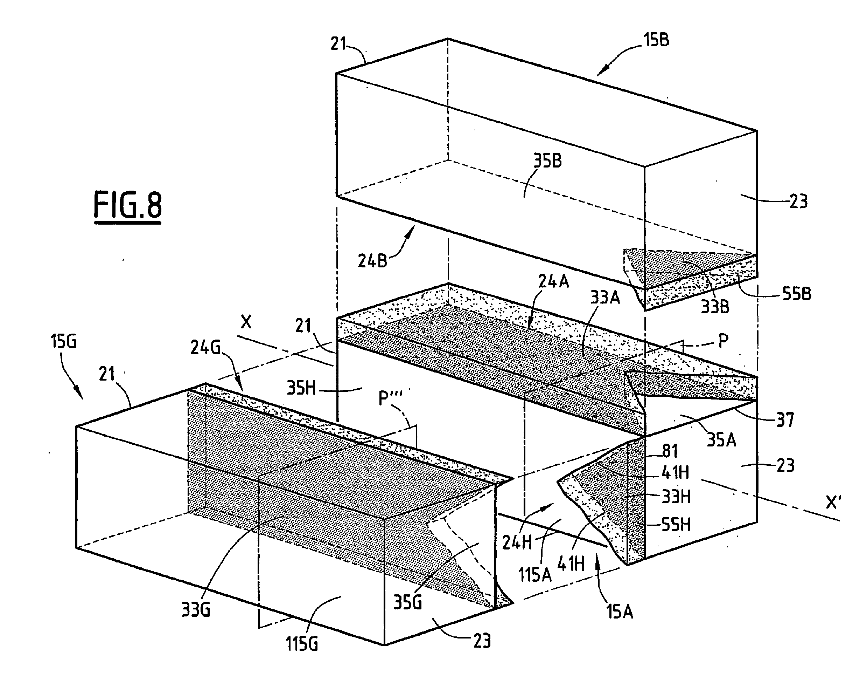

Une quatrième structure suivant l'invention est illustrée sur la Figure 8. Le premier bloc de filtration 15A (en bas à droite sur la Figure) présente une troisième face latérale 24H, adjacente à la première face latérale 24A, disposée en regard d'une quatrième face latérale 24G d'un troisième bloc de filtration 15G.

Comme illustré sur la Figure 8, la troisième face latérale 24H comprend une cinquième région 33H d'adhérence forte, délimitée par un triangle de forme analogue au triangle qui délimite la première région 35A d'adhérence faible de la première face 24A.

Ainsi, la cinquième région 33H d'adhérence forte est délimitée par l'arête de sortie 81 commune à la troisième face latérale 24H et à la face d'évacuation 23 et par deux bords latéraux 41 H de forme divergente vers la face d'évacuation 23.

Par ailleurs, le reste de la troisième face 24H présente une sixième région 35H d'adhérence faible de forme complémentaire à la cinquième région 33H d'adhérence forte.

La sixième région 35H d'adhérence faible de la troisième face 24H est disposée en regard d'une sixième région 33G d'adhérence forte de la quatrième face 24G, et la cinquième région 33H d'adhérence forte de la troisième face 24H est disposée en regard d'une cinquième région 33G d'adhérence forte de la quatrième face 24G, les formes respectives de ces régions étant sensiblement identiques.

Le fonctionnement de la quatrième structure selon l'invention est analogue à celui de la première structure. En cas de fissuration, toute partie aval 115A du premier bloc de filtration 15A délimitée par un plan P de fissuration et la face d'évacuation 23, est retenue par la butée 55B solidaire du deuxième bloc de filtration 15B. Par ailleurs, toute partie aval 115G du troisième bloc de filtration 15G, délimitée par un plan P''' transversal et la face d'évacuation 23, est retenue par la butée 55H solidaire de la troisième face 24H du premier bloc de filtration 15A, en regard de la cinquième région 33H d'adhérence forte.

Dans le cas d'un filtre analogue à celui représenté sur la Figure 1, chaque bloc de filtration 15 comprend deux faces 24 opposées qui présentent une structure analogue à la première face 24A du premier bloc de filtration 15A représenté sur la Figure 8, et deux faces opposées qui présentent une structure analogue à la troisième face 24H du premier bloc de filtration 15A représenté sur la Figure 8. La retenue anti-recul est ainsi assurée pour chacun des blocs 15.

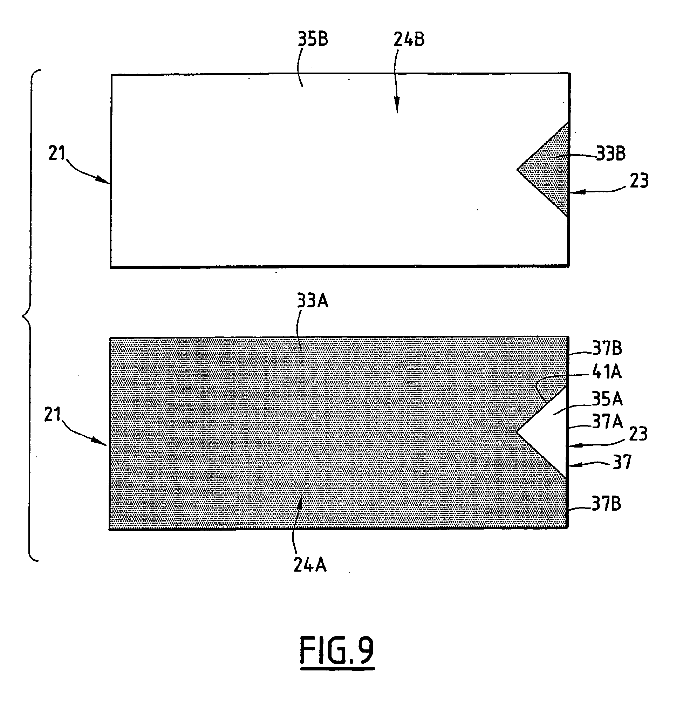

Dans la cinquième structure selon l'invention, représentée en regard de la Figure 9, la première région 35A d'adhérence faible de la première face 24A s'étend uniquement le long d'une partie centrale 37A de l'arête commune 37. La deuxième région 33A d'adhérence forte de la première face 24A s'étend le long de l'arête commune 37 suivant les parties 37B complémentaires à cette partie 37A de l'arête commune 37.

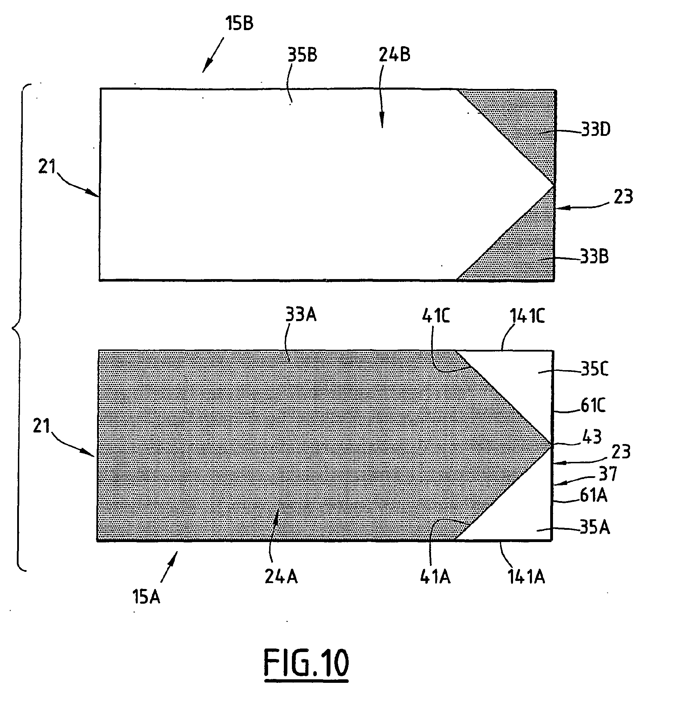

La sixième structure selon l'invention, représentée en regard de la Figure 10, est une variante de la deuxième structure selon l'invention (Figure 5). A la différence de la deuxième structure, la deuxième région 33A d'adhérence faible ou nulle, sur la première face 24A, s'étend jusqu'à un point unique de contact 43 avec l'arête commune 37, situé au milieu de celle-ci. Chacune des première et troisième régions 35A et 35C d'adhérence faible est délimitée par un triangle rectangle constitué par une moitié 61A, 61C de l'arête commune 37, par un bord divergent 41A, 41C qui part du point 43, et par une partie 141A, 141C de l'arête latérale commune à la première face 24A du premier bloc 15A et à une face latérale de ce bloc 15A adjacente à la première face 24A.

Grâce à l'invention qui vient d'être décrite, il est possible de disposer d'une structure de filtration qui peut endurer une multitude de phases de régénération tout en préservant sa cohésion mécanique et son étanchéité par rapport aux suies.

Cette structure permet de préserver d'une part, la cohésion mécanique entre les organes de filtration et d'autre part, la retenue de parties aval d'organes de filtration qui pourraient se détacher de ces organes.

## Revendications

1. Structure de filtration (11), notamment filtre à particules pour les gaz d'échappement d'un moteur à combustion interne, du type comprenant :
- au moins des premier et deuxième organes de filtration (15A, 15B), chaque organe de filtration (15A, 15B) présentant une face d'admission (21) et une face d'évacuation (23), reliées entre elles par au moins trois faces latérales (24), lesdits premier et deuxième organes de filtration (15A, 15B) présentant respectivement une première et une deuxième faces latérales (24A, 24B) disposées en regard l'une de l'autre ; et
- un joint (17) de liaison desdites faces (24A, 24B), s'étendant entre lesdites faces (24A, 24B) ;
la première face latérale (24A) comprenant au moins une première région (35A) d'adhérence faible ou nulle avec ledit joint (17), qui s'étend en regard d'une première région (33B) d'adhérence forte avec ledit joint (17) de la deuxième face latérale (24B), ladite première région (35A) d'adhérence faible ou nulle étant délimitée par au moins une partie de l'arête (37) commune à la première face (24A) et à la face d'évacuation (23) ;
**caractérisée en ce que**, dans une zone adjacente à ladite arête commune (37), la première région (35A) d'adhérence faible ou nulle avec ledit joint (17) comporte au moins un bord latéral (41A) de forme divergente vers la face d'évacuation (23), ledit bord latéral (41A) s'étendant jusqu'à ladite arête commune (37).

2. Structure (11) selon la revendication 1, **caractérisée en ce que** le reste de ladite zone présente, sur ladite première face (24A), une deuxième région (33A) d'adhérence forte avec ledit joint (17), laquelle s'étend jusqu'à ladite arête commune (37), et sur ladite deuxième face (24B), une deuxième région (35B) d'adhérence faible ou nulle avec ledit joint (17), en regard de ladite deuxième région (33A) d'adhérence forte avec ledit joint (17).

3. Structure (11) selon l'une quelconque des revendications précédentes, **caractérisée en ce que** l'angle (α) formé par ledit bord latéral (41A) et ladite arête commune (37), est inférieur ou égal à 50° environ.

4. Structure (11) selon l'une quelconque des revendications précédentes, **caractérisée en ce que** ladite première région (35A) d'adhérence faible ou nulle avec ledit joint (17) s'étend sensiblement suivant toute la longueur de ladite arête commune (37).

5. Structure (11) selon l'une quelconque des revendications précédentes, **caractérisée en ce que** ladite première région (35A) d'adhérence faible ou nulle avec ledit joint (17) est délimitée par un triangle.

6. Structure (11) selon l'une quelconque des revendications précédentes, **caractérisée en ce que** la première face latérale (24A) comporte une troisième région (35C) d'adhérence faible ou nulle avec ledit joint (17), distincte de la première région (35A) d'adhérence faible ou nulle avec ledit joint (17), délimitée au moins partiellement par ladite arête commune (37) et comprenant au moins un bord latéral (41 C) de forme divergente vers la face d'évacuation (23), ce bord latéral (41 C) s'étendant jusqu'à ladite arête commune (37).

7. Structure (11) selon l'une quelconque des revendications précédentes, **caractérisée en ce que** la première face (24A) comporte au moins une quatrième région (35E) d'adhérence faible ou nulle avec ledit joint (17), qui comporte au moins un bord latéral (65E) convergent, de forme convergente vers la face d'évacuation, le bord latéral convergent (65E) s'étendant jusqu'à ladite première région (35A) d'adhérence faible ou nulle avec ledit joint (17), ladite quatrième région (35E) d'adhérence faible ou nulle avec ledit joint (17) étant disposée en regard d'une quatrième région (33F) d'adhérence forte avec ledit joint (17) de la deuxième face (24B).

8. Structure (11) selon l'une quelconque des revendications précédentes, **caractérisée en ce que** le premier organe de filtration (15A) présente une troisième face latérale (24H), disposée en regard d'une quatrième face latérale (24G) d'un troisième organe de filtration (15G), la troisième face latérale (24H) comprenant au moins une cinquième région (33H) d'adhérence forte avec ledit joint (17), délimitée au moins partiellement par l'arête de sortie (81) commune à la troisième face (24H) et à la face de sortie (23),
et **en ce que** dans une zone adjacente à ladite arête de sortie (81), la cinquième région (33H) d'adhérence forte avec ledit joint (17) comporte au moins un bord latéral (41 H) de forme divergente vers la face d'évacuation (23), ce bord latéral (41 H) s'étendant jusqu'à ladite arête de sortie (81), la cinquième région (33H) d'adhérence forte avec ledit joint (17) étant disposée en regard d'une cinquième région (35G) d'adhérence faible ou nulle avec ledit joint (17) sur ladite quatrième face (24G).

9. Ligne d'échappement (13), **caractérisée en ce qu'**elle comprend une structure (11) selon l'une quelconque des revendications précédentes.

## Claims

1. Filtering structure (11), especially a particle filter for the exhaust gases of an internal combustion engine, of the type comprising:
- at least first and second filtering members (15A, 15B), each filtering member (15A, 15B) having an intake surface (21) and an evacuation surface (23), connected to one another by at least three lateral surfaces (24), said first and second filtering members (15A, 15B) having, respectively, a first and a second lateral surface (24A, 24B) arranged opposite one another; and
- a connecting joint (17) for said surfaces (24A, 24B), extending between said surfaces (24A, 24B);
the first lateral surface (24A) comprising at least one first region (35A) of low or zero adhesion to said joint (17), which extends opposite a first region (33B) of strong adhesion to said joint (17) of the second lateral surface (24B), said first region (35A) of low or zero adhesion being delimited by at least part of the edge (37) common to the first surface (24A) and the evacuation surface (23);
**characterised in that** in a zone adjacent to said common edge (37), the first region (35A) of low or zero adhesion with said joint (17) comprises at least one lateral edge (41A) divergent in shape towards the evacuation surface (23), said lateral edge (41A) extending up to said common edge (37).

2. Structure (11) according to claim 1, **characterised in that** the remainder of said zone comprises, on said first surface (24A), a second region (33A) of strong adhesion to said joint (17), which extends up to said common edge (37), and on said second surface (24B), a second region (35B) of low or zero adhesion with said joint (17), opposite said second region (33A) of strong adhesion to said joint (17).

3. Structure (11) according to any one of the preceding claims, **characterised in that** the angle (α) formed by said lateral edge (41A) and said common edge (37) is less than or equal to about 50°.

4. Structure (11) according to any one of the preceding claims, **characterised in that** said first region (35A) of low or zero adhesion to said joint (17) extends substantially along the entire length of said common edge (37).

5. Structure (11) according to any one of the preceding claims, **characterised in that** said first region (35A) of low or zero adhesion to said joint (17) is delimited by a triangle.

6. Structure (11) according to any one of the preceding claims, **characterised in that** the first lateral surface (24A) comprises a third region (35C) of low or zero adhesion to said joint (17), distinct from the first region (35A) of low or zero adhesion to said joint (17), delimited at least partly by said common edge (37) and comprising at least one lateral edge (41C) diverging in shape towards the evacuation surface (23), this lateral edge (41C) extending up to said common edge (37).

7. Structure (11) according to any one of the preceding claims, **characterised in that** the first surface (24A) comprises at least one fourth region (35E) of low or zero adhesion to said joint (17), which comprises at least one convergent lateral edge (65E) converging in shape towards the evacuation surface, the convergent lateral edge (65E) extending up to said first region (35A) of low or zero adhesion with said joint (17), said fourth region (35E) of low or zero adhesion to said joint (17) being arranged opposite a fourth region (33F) of strong adhesion to said joint (17) of the second surface (24B).

8. Structure (11) according to any one of the preceding claims, **characterised in that** the first filtering member (15A) has a third lateral surface (24H), arranged opposite a fourth lateral surface (24G) of a third filtering member (15G), the third lateral surface (24H) comprising at least one fifth region (33H) of strong adhesion to said joint (17), at least partly delimited by the exit edge (81) common to the third surface (24H) and the exit surface (23),
and **in that** in a zone adjacent to said exit edge (81) the fifth region (33H) of strong adhesion to said joint (17) comprises at least one lateral edge (41H) divergent in shape towards the evacuation surface (23), this lateral edge (41H) extending up to said exit edge (81), the fifth region (33H) of strong adhesion to said joint (17) being arranged opposite a fifth region (35G) of low or zero adhesion to said joint (17) on said fourth surface (24G).

9. Exhaust line (13), **characterised in that** it comprises a structure (11) according to any one of the preceding claims.

## Patentansprüche

1. Filterstruktur (11), insbesondere Teilchenfilter für Abgase eines Verbrennungsmotors, umfassend:
- mindestens ein erstes und ein zweites Filterorgan (15A, 15B), wobei jedes Filterorgan (15A, 15B) eine Eintrittsseite (21) und eine Austrittsseite (23) aufweist, die durch mindestens drei Seitenflächen (24) miteinander verbunden sind, wobei das erste und das zweite Filterorgan (15A, 15B) eine erste bzw. eine zweite Seitenfläche (24A, 24B) aufweisen, die einander gegenüber angeordnet sind; und
- ein Verbindungselement (17) zur Verbindung der Seitenflächen (24A, 24B), das sich zwischen diesen Seitenflächen (24A, 24B) erstreckt;
wobei die erste Seitenfläche (24A) mindestens einen ersten Bereich (35A) von geringer Haftung oder von einer Haftung null an dem Verbindungselement (17) umfasst, der sich gegenüber einem ersten Bereich (33B) der zweiten Seitenfläche (24B) von starker Haftung an dem Verbindungselement (17) erstreckt, wobei der erste Bereich (35A) von schwacher Haftung oder einer Haftung null durch mindestens einen Teil der der ersten Seitenfläche (24A) und der Austrittsseite (23) gemeinsamen Kante (37) begrenzt ist;
**dadurch gekennzeichnet, dass** der erste Bereich (35A) von schwacher Haftung oder einer Haftung null an dem Verbindungselement (17) in einer der gemeinsamen Kante (37) benachbarten Zone mindestens einen Seitenrand (41A) mit auf die Austrittsseite (23) zu divergierender Form umfasst, wobei dieser Seitenrand (41A) sich bis zu der gemeinsamen Kante (37) erstreckt.

2. Struktur (11) nach Anspruch 1, **dadurch gekennzeichnet, dass** der Rest dieser Zone auf dieser ersten Seite (24A) einen zweiten Bereich (33A) von starker Haftung an dem Verbindungselement (17), der sich bis zu der gemeinsamen Kante (37) erstreckt, und auf der zweiten Seitenfläche (24B) einen zweiten Bereich (35B) von schwacher Haftung oder einer Haftung null an dem Verbindungselement (17) gegenüber dem zweiten Bereich (33A) von starker Haftung an dem Verbindungselement aufweist.

3. Struktur (11) nach einem der vorhergehenden Ansprüche, **dadurch gekennzeichnet, dass** der von dem Seitenrand (41A) und der gemeinsamen Kante (37) gebildete Winkel (α) kleiner als oder gleich etwa 50° ist.

4. Struktur (11) nach einem der vorhergehenden Ansprüche, **dadurch gekennzeichnet, dass** der erste Bereich (35A) von schwacher Haftung oder von einer Haftung null an dem Verbindungselement (17) sich im Wesentlichen über die ganze Länge der gemeinsamen Kante (37) erstreckt.

5. Struktur (11) nach einem der vorhergehenden Ansprüche, **dadurch gekennzeichnet, dass** der erste Bereich (35A) von schwacher Haftung oder von einer Haftung null an dem Verbindungselement (17) durch ein Dreieck begrenzt ist.

6. Struktur (11) nach einem der vorhergehenden Ansprüche, **dadurch gekennzeichnet, dass** die erste Seitenfläche (24A) einen dritten Bereich (35C) von schwacher Haftung oder einer Haftung null an dem Verbindungselement (17) umfasst, der von dem ersten Bereich (35A) von schwacher Haftung oder einer Haftung null an dem Verbindungselement (17) verschieden ist und mindestens teilweise durch die gemeinsame Kante (37) begrenzt ist und mindestens einen Seitenrand (41C) von auf die Austrittsfläche (23) zu divergierender Form umfasst, wobei dieser Seitenrand (41C) sich bis zu der gemeinsamen Kante (37) erstreckt.

7. Struktur (11) nach einem der vorhergehenden Ansprüche, **dadurch gekennzeichnet, das** die erste Seitenfläche (24A) mindestens einen vierten Bereich (35E) von schwacher Haftung oder einer Haftung null an dem Verbindungselement (17) umfasst, der mindestens einen konvergierenden Seitenrand (65E) von auf die Austrittsfläche zu konvergierender Form umfasst, wobei der konvergierende Seitenrand (65E) sich bis zu dem ersten Bereich (35A) von schwacher Haftung oder einer Haftung null an dem Verbindungselement (17) erstreckt, wobei der vierte Bereich (35E) von schwacher Haftung oder einer Haftung null an dem Verbindungselement (17) gegenüber einem vierten Bereich (33F) von starker Haftung an dem Verbindungselement (17) der zweiten Seitenfläche (24B) angeordnet ist.

8. Struktur (11) nach einem der vorhergehenden Ansprüche, **dadurch gekennzeichnet, dass** das erste Filterorgan (15A) eine dritte Seitenfläche (24H) aufweist, die gegenüber einer vierten Seitenfläche (24G) eines dritten Filterorgans (15G) angeordnet ist, wobei die dritte Seitenfläche (24H) mindestens einen fünften Bereich (33H) von starker Haftung an dem Verbindungselement (17) umfasst, der mindestens teilweise durch die der dritten Seitenfläche (24H) und der Austrittsfläche (23) gemeinsame Austrittskante (81) begrenzt ist, und dass der fünfte Bereich (33H) von starker Haftung an dem Verbindungselement (17) in einer der Austrittskante (81) benachbarten Zone mindestens einen Seitenrand (41H) von auf die Austrittsseite (23) zu divergierender Form umfasst, wobei dieser Seitenrand (41H) sich bis zu der Austrittskante (81) erstreckt, wobei der fünfte Bereich (33H) von starker Haftung an dem Verbindungselement (17) gegenüber einem fünften Bereich (35G) von schwacher Haftung oder einer Haftung null an dem Verbindungselement (17) auf der vierten Seitenfläche (24G) angeordnet ist.

9. Abgasstrecke (13), **dadurch gekennzeichnet, dass** sie eine Struktur (11) nach einem der vorhergehenden Ansprüche umfasst.
